(19) Europäisches Patentamt
European Patent Office
Office européen des brevets

(11) **EP 4 434 343 A1**

(12) **EUROPEAN PATENT APPLICATION**

(43) Date of publication:
**25.09.2024 Bulletin 2024/39**

(21) Application number: **23382258.4**

(22) Date of filing: **21.03.2023**

(51) International Patent Classification (IPC):
*A01N 1/02* *(2006.01)*      *A01N 25/10* *(2006.01)*
*A01N 25/12* *(2006.01)*      *A01N 25/24* *(2006.01)*
*A01N 25/26* *(2006.01)*      *A01N 25/30* *(2006.01)*
*A01N 65/28* *(2009.01)*

(52) Cooperative Patent Classification (CPC):
**A01N 1/02; A01N 25/10; A01N 25/12; A01N 25/24;
A01N 25/26; A01N 25/30; A01N 65/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Symborg, S.L.
30100 Murcia (ES)**

(72) Inventors:
• **JUÁREZ MOLINA, Jesús
30100 Murcia (ES)**

• **FERNÁNDEZ MARTÍN, Félix
30100 Murcia (ES)**
• **MARTINEZ RUIZ, Jesús
30100 Murcia (ES)**
• **TORRES VERA, Rocío
30100 Murcia (ES)**
• **MARTIN MARTINEZ, Jose Miguel
03690 San Vicente del Raspeig (ES)**
• **FUSTER ESTESO, Sara
03690 San Vicente del Raspeig (ES)**

(74) Representative: **Trupiano, Federica et al
Torner, Juncosa I Associats, S.L.
C/Pau Claris, 108, 1r 1a
08009 Barcelona (ES)**

(54) **ADHESIVE COMPRISING A PLANT EXTRACT AND USES THEREOF**

(57)    The present invention relates to the use of at least one plant extract as adhesive in seed coating or as a binder in the production of granules and microgranules, to an adhesive comprising at least a plant extract and a carboxylic acid and/or DMSO, to the use of said adhesive in seed coating or in the production of granules and microgranules, to a seed or an inert core material provided with said adhesive and to a coated seed or a granule or micro granule comprising said adhesive and a coating material.

**EP 4 434 343 A1**

Processed by Luminess, 75001 PARIS (FR)

**Description**

Field of the invention

The present invention relates to the field of agronomy. In particular, the present invention is related to adhesives, in particular adhesives comprising plant extracts, suitable to be used in agriculture.

Background of the invention

Several activities related to the field of agronomy and agriculture involve the use of adhesives. For example, it is known that the use of an adhesive is crucial in seed coating and granule and microgranule.

The seed coating consists of treating the surface of the seed with a material, a substance or a compound that favours the growth of the seed or protects it from adverse conditions such as pests and frost, after sowing. To treat the surface of the seeds, particular coating machines able to add homogeneously a material, a substance or a compound (e.g., an inert carrier, a colorant, a fungicide, a bio-fungicide, an insecticide, a bio-insecticide, a nematicide, a bio-nematicide, a fertiliser) together with water and an adhesive, are used. When the treated seed dries, the adhesive keeps the material, the substance or the compound on the seed surface, preventing it from falling off and protecting it from degradation. Therefore, the adhesive helps the seed treatment to remain optimal until the time of sowing, making it possible the storage of the seeds. In seed coating, the seeds are provided with materials, substances or compounds that have beneficial effects for plant growth and yield. The term "seed coating" includes different technologies, i.e., film coating, encrusting and pelleting. These technologies mainly differ in the thickness of the coating and in the consequent seed weight increase.

In the agricultural industry, granules and microgranules are based on the use of a core of inert material (e.g. silica) that is repeatedly coated with adhesive, wherein the adhesive acts as a binder for one or more active ingredients (such as, for example, colorants, fungicides, bio-fungicides, insecticides, bio-insecticides, nematicides, bionematicides, fertilisers (including plant biostimulants).

For an effective seed coating or an efficient granule and microgranule preparation, the coating material substance or compound, or the active ingredient, should remain intact and adhere to the seed or the granule or microgranule core until they are exposed to water. Compounds such as polyvinyl alcohol, soybean flour and natural gums are known as suitable adhesive compounds for seed coating.

Other natural products, such as plant extracts, are known as suitable adhesives in the fields of food, packaging and carpentry.

The adhesives currently available have several drawbacks. In particular, they often show unsatisfactory adhesion capacity, so that the coating material is removed from the seed before sowing, and the beneficial effects of the coating are lost. In addition, these adhesives can adhere coating materials in a non-homogeneous manner, forming agglomerations randomly distributed on the surface on the seeds, instead of a homogeneous coating, thus reducing or jeopardizing the beneficial effects of the coating material. Additionally, during, for example, handling and transportation, the coating may crack and/or it can be removed from the seeds, thus creating dust which can be harmful to users. Also, known adhesives based on natural substances have limited durability and are prone to microbial growth.

Currently, synthetic adhesives allow homogeneous impregnation and high adhesive capacity but can have a negative impact on human and animal health and the environment. Also, they can be substances of difficult degradation.

Therefore, there is a need for adhesives that have improved properties such as, for example, reduced dusting, increased homogeneity of impregnation of the seeds, improved durability, improved resistance to microbial growth, and that do not have a negative impact on human and animal health and the environment.

Summary of the invention

It is an aim of the present invention to solve the above mentioned problems and to provide an adhesive or a binder having improved properties.

Another aim of the present invention is to provide an adhesive or a binder having reduced dusting.

A further aim of the present invention is to provide an adhesive or a binder which allows a homogeneous impregnation of the seeds and provides homogeneous distribution of active ingredients in granules and microgranules.

Also aim of the present invention is to provide an adhesive or a binder having high adhesion capacity.

A further aim of the present invention is to provide an adhesive or a binder which does not have a negative impact on human and animal health and the environment.

Still another aim of the present invention is to provide an adhesive that induces the germination of the seed which is applied to.

These and other aims are achieved by the present invention, which relates to the use of at least one plant extract as adhesive in seed coating or as a binder in the production of granules and microgranules. The present invention also relates to an adhesive, particularly an adhesive composition, comprising at least a plant extract and at least one further component selected from a carboxylic acid, DMSO and mixtures thereof.

Detailed description of the invention

Object of the present invention is the use of at least one plant extract as adhesive in seed coating or as a binder in the production of granules and microgranules.

In embodiments, the plant extract comprises lignin. In embodiments, the plant extract including lignin may be with or without pectins, and/or with or without polysaccharides.

In embodiments, the plant extract comprises pectin.

According to embodiments, the plant extract comprises lignin and/or pectin. In other words, in embodiments, the plant extract may comprise lignin; in other embodiments, the plant extract may comprise pectin; in embodiments, the plant extract may comprise a mixture of lignin and pectin.

In embodiments, the plant extract is a lignin-based extract, with or without pectins, with or without polysaccharides. According to the present description, the term "lignin-based" means an extract with at least 10% by weight of total lignin.

In embodiments, the plant extract is a pectin-based extract. According to the present description, the term "pectin-based" means an extract with at least 5% by weight of pectin.

According to embodiments, the plant extract is selected from eucalytpus extract, wheat straw extract, pine straw extract, alfalfa extract, kenaf extract, flax fiber extract, aspen extract, pau-brasil extract, bamboo extract, corn stover extract, sugar cane bagasse extract, Napier grass extract, ryegrass extract, tall fescue extract, bluestem extract, red clover extract, lespedeza extract, bromegrass extract, *Paulonia fortunei* wood extract, prairie cordgrass extract, switchgrass extract, sweetgum extract, pruce and birch wood chips extract, almond shell extract, beech wood extract, spruce wood extract, dhaincha (*Sesbania bispinosa*) extract, kash phool (*Saccharum spontaneum*) extract, banana stem extract, chestnut wood extract, quebracho wood extract, rubberwood extract, lambu (*Khaya anthotheca*) extract, raj-koroi (*Albizia richardiana*) extract, jhau (*Casuarina equisetifolia*) extract, sil-koroi (*Albizia procera*) extract, katbadam (*Terminalia catappa*) extract, jolpai (*Elaeocarpus robustus*) extract, and arjun (*Terminalia arjuna*) extract, poplar extract, fescue extract and mixtures thereof. Preferably, the plant extract is eucalyptus extract.

It has been surprisingly observed that plant extracts, in particular eucalyptus extract, can be effectively and safely used as adhesive in seed coating, as well as binder in the production of granules and microgranules, providing high adhesion properties as well as high compatibility with several types of coating materials. In particular, it was observed that plant extracts are fully compatible both with seeds and coating materials, including living coating materials, such as microbial and non-microbial plant biostimulant.

The plant extract can be used as adhesive in seed coating, wherein the plant extract is used to coat a seed with one or more coating materials. For example, in embodiments, the coating material can be selected from at least one inert carrier (such as talc or graphite), at least one colorant, at least one fungicide, at least one bio-fungicide, at least one insecticide, at least one bio-insecticide, at least one nematicide, at least one bio-nematicide, at least one fertiliser, for example a plant biostimulant and mixtures thereof.

The plant extract can be used as binder in granules and microgranules (e.g., in the production of granules and microgranules), wherein the plant extract is used to coat a core of inert material with one or more coating materials. For example, in embodiments, the coating material can be selected from at least one colorant, at least one fungicide, at least one bio-fungicide, at least one insecticide, at least one bio-insecticide, at least one nematicide, at least one bio-nematicide, at least one fertiliser, for example a plant biostimulant, and mixtures thereof.

In embodiments, the fungicide is selected from copper, mercury, tin, zinc, metallic and sulfur compounds, organophosphorus compounds, dithiocarbamates, carbamates, halogenated hydrocarbons, aromatic nitrocompounds, quinines, anilides, guanidine compounds, phthalimides, pyrimidines, thiodiazoles, triazines, isoxazolones, imidazoles, antibiotics, oils, aldehydes, ketones, oxides and mixtures thereof.

In embodiments, the bio-fungicide is selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the bio-fungicide is selected from bioactive compounds derived from one or more microorganisms selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the insecticide is selected from organochlorine, organophosphate, carbamate, pyrethroid, neonicotinoid, ryanoid, avermectin, and mixtures thereof.

In embodiments, the bio-insecticide is selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp. and mixtures thereof.

In embodiments, the bio-insecticide is selected from bioactive compounds derived from one of more microorganisms selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp. and mixtures thereof.

In embodiments, the nematicide is selected from organophosphate, carbamate and mixtures thereof.

In embodiments, the bio-nematicide is selected from *Pasteuria* spp., *Bacillus* spp., *Paecilomyces* spp., and mixtures thereof.

In embodiments, the bio-nematicide is selected from bioactive compounds derived from one of more microorganisms selected from *Pasteuria* spp., *Bacillus* spp., *Paecilomyces* spp., and mixtures thereof.

In embodiments, the fertiliser is selected from organic, organo-mineral and inorganic macronutrients, inorganic micronutrients, liming materials, organic and inorganic soil improvers, growing mediums, nitrification, denitrification and urease inhibitors, microbial and non-microbial plant bioestimulant and mixtures thereof.

In embodiments, the microbial plant biostimulant may be selected from *Trichoderma harzianum,* clay-embedded *Glomus iranicum* var. *tenuihypharum* var. nov. and mixtures thereof.

In embodiments, the coating material may be selected from microbial plant biostimulant (e.g., *Trichoderma harzianum,* clay-embedded *Glomus iranicum* var. *tenuihypharum* var. nov.), organo-mineral fertiliser based on amino acids, and mixtures thereof.

A plant extract according to the invention can be obtained by techniques that are known, per se, in the art, such as hydrothermolysis, solvent extraction with microwave assisted extraction, supercritical solvent extraction, ethanol extraction, steam explosion and any extraction method applicable to lignins that does not come from the paper industry.

In hydrothermolysis, the hydrothermal pretreatment of wood biomass with water at high temperature (170-230 °C) and pressure (up to 5 MPa) is carried out. The hot compressed water is put in contact with the woody-biomass for up to 15 minutes at a temperature up to 200 °C. The liquid hot water process allows to dissolve between 40 and 60% of the total biomass, and 35-60% of lignin.

In the solvent extraction with microwave assisted extraction, the wood is mixed with ethanol or isopropanol under ambient conditions by shaking (the solid:liquid ratio is, in general, 1:10 by weight) in a condenser. The condenser is closed with a plastic seal.

The solvent extraction is performed in a microwave oven at 100-200 W power for 5-30 min with 5 min increments.

In the supercritical solvent extraction, $CO_2$ under extremely high pressure is used to separate wood extracts (for example caffeine from coffee).

In the ethanol or isopropanol extraction, the wood is mixed with ethanol or isopropanol under ambient conditions by shaking (the solid:liquid ratio is, in general, 1:10 by weight).

In the steam explosion, steam under high pressure is applied to the biomass, followed by a rapid decompression, which forces the fibrous material to explode into components.

Plant extracts suitable to be used according to the present invention are known, per se, in the art.

The plant extract can be provided to seed, optionally together with one or more coating material, using techniques that are, per se, known in the art, for example, using a SATEC CONCEPT ML 2000 equipment (Satec Equipment GmBh, Elmshorn, Germany).

The plant extract can be provided to an inert material, optionally together with one or more coating material, in order to obtain granules and microgranules using techniques that are, per se, known in the art, for example, using fluid bed technology. This technique consists of adding particles to an air current, remaining in suspension. From the top, a liquid is sprayed into the fluid bed. Particles in contact with the liquid become wet and sticky. Sticky particles collide with other particles and adhere to them, forming granules or microgranules depending on their final size.

According to embodiments, the inert material to be used as inert core in a granule and microgranule is selected from silicon oxides as diatomite and graded sands, calcium oxides as hydrated lime, sulphates as gypsum, carbonates as calcite, silicates as talc, pyrophyllite and clays.

Another object of the present invention is an adhesive, particularly an adhesive composition (referred to in the present description also as the "composition"), comprising at least a plant extract and at least one further component selected from a carboxylic acid, DMSO, and mixtures thereof.

According to embodiments, the composition of the invention is in the form of a liquid, a solid or a gel.

According to embodiments, when the composition is in liquid form, it may be in the form of an aqueous liquid or an emulsifiable concentrate. In embodiments, when the composition is in solid form, it may be in the form of powder or granules. Preferably, the composition (i.e., the adhesive composition) is in liquid form.

Preferably, the adhesive comprises water. In other words, the adhesive is, preferably, an aqueous adhesive, i.e., an aqueous adhesive composition.

In embodiments, the plant extract is a lignin-based extract, with or without pectins, with or without polysaccharides.

According to embodiments, the plant extract is selected from eucalyptus extract, wheat straw extract, pine straw extract, alfalfa extract, kenaf extract, flax fiber extract, aspen extract, pau-brasil extract, bamboo extract, corn stover extract, sugar cane bagasse extract, Napier grass extract, ryegrass extract, tall fescue extract, bluestem extract, red clover extract, lespedeza extract, bromegrass extract, *Paulonia fortunei* wood extract, prairie cordgrass extract, switchgrass extract, Sweetgum extract, pruce and birch wood chips extract, almond shell extract, beech wood extract, spruce wood extract, dhaincha (*Sesbania bispinosa*) extract, kash phool (*Saccharum spontaneum*) extract, banana stem extract, chestnut wood extract, quebracho wood extract, rubberwood extract, lambu (*Khaya anthotheca*) extract, rajkoroi (*Albizia richardiana*) extract, jhau (*Casuarina equisetifolia*) extract, sil-koroi (*Albizia procera*) extract, katbadam (*Terminalia catappa*) extract, jolpai (*Elaeocarpus robustus*) extract, and arjun (*Terminalia arjuna*) extract, poplar extract, fescue extract and mixtures thereof.

Preferably, the plant extract is eucalyptus extract.

As above mentioned, plant extracts suitable to be used according to the present invention are known, per se, in the art.

The amount of plant extract, preferably eucalyptus extract, may be in the range from 10% to 90% by weight of the adhesive, preferably from 20% by weight to 80% by weight of the adhesive. The mentioned ranges refer to the whole amount of a plant extract having a solid content which is, in turn, in the range from 20% and 70% by weight of the plant extract. The solid content of the plant extract may be determined by dividing the dried solid at 80 °C for 48 h of plant extract by the liquid plant extract mass multiplied by 100 and expressed as a percentage (%).

According to embodiments, the adhesive comprises a plant extract, preferably eucalyptus extract, and a carboxylic acid.

In embodiments, the carboxylic acid may be selected from saturated aliphatic carboxylic acid, unsaturated aliphatic carboxylic acid, aromatic carboxylic acid, polycarboxylic acid, hydroxy and keto carboxylic acid, and mixtures thereof. For example, suitable carboxylic acids are lactic acid, citric acid, caffeic acid, gallic acid, glycolic acid, oxalic acid, malonic acid, ascorbic acid, acetic acid, formic acid, crotonic acid, butyric acid, palmitic acid, stearic acid, adipic acid, sorbic acid, oleic acid, linoleic acid, benzoic acid, salicylic acid, phthalic acid, cinnamic acid, tartaric acid, pyruvic acid, and mixtures thereof.

Preferably, the carboxylic acid is lactic acid.

It was surprisingly observed that, when the adhesive includes a carboxylic acid, preferably lactic acid, a reduction of dusting and an improvement in adhesion capacity is obtained. In addition, the carboxylic acid, preferably lactic acid inhibits microbial growth.

According to embodiments, the adhesive composition may further comprise one or more acid biocidal substances, one or more non-acid biocidal substances, or mixtures thereof, that have an additional effect on biological control.

The amount of carboxylic acid, preferably lactic acid, may be in the range from 0.005% by weight to 20% by weight of the adhesive, preferably 0.01% by weight to 10% by weight of the adhesive.

According to embodiments, the adhesive comprises a plant extract, preferably eucalyptus extract, and DMSO.

It was surprisingly observed that, when the adhesive includes DMSO (dimethyl sulfoxide), a particularly homogeneous coating can be obtained.

Moreover, it was surprisingly observed that, when the adhesive includes DMSO, the germination of the seeds in particularly enhanced.

Therefore, a further object of the present invention is the use of the adhesive composition of the invention to induce germination of seeds.

The amount of DMSO may be in the range from 0.05% by weight to 50% by weight of the adhesive, preferably from 1% by weight to 30% by weight of the adhesive. According to embodiments, the adhesive comprises a plant extract, preferably eucalyptus extract, a carboxylic acid, preferably lactic acid, and DMSO.

It was surprisingly observed that, when the adhesive includes both a carboxylic acid (preferably, lactic acid) and DMSO (dimethyl sulfoxide), an adhesive having significantly reduced dusting, improved coating homogeneity, and high adhesion capacity is obtained.

In embodiments, the adhesive further comprises one or more plasticizers. The plasticizer may be selected from synthetic plasticizers, natural plasticizers and mixtures thereof. For example, suitable synthetic plasticizers are sorbitol, rosin esters, glycols, xilytol, paraffin oil, Petrolatum jelly (vaseline) and mixtures thereof. For example, suitable natural plasticizers are glycerol, sunflower oil, soybean oil, castor oil and mixtures thereof.

In embodiments, the plasticizer is selected from sorbitol, rosin esters, glycols, xilytol, paraffin oil, Petrolatum jelly (vaseline), glycerol, sunflower oil, soybean oil and, castor oil, and mixtures thereof.

Preferably, the plasticizer is selected from glycerol, sorbitol and mixtures thereof. In embodiments, the adhesive further comprises glycerol and/or sorbitol.

The amount of plasticizer may be in the range from 0.01% by weight to 30% by weight of the adhesive, preferably, from 0.1% by weight to 15% by weight of the adhesive. In embodiments, the adhesive further comprises one or more surfactants. The surfactant may be selected from synthetic surfactants, natural surfactants and mixtures thereof.

For example, suitable synthetic surfactants are ammonium laureth sulfate, quaternium-18 bentonite, laureth-23, disodium cocoamphodipropionate and mixtures thereof. For example, suitable natural surfactants are surfactin, saponin and mixtures thereof.

In embodiments, the surfactant is selected from ammonium laureth sulfate, quaternium-18 bentonite, laureth-23, disodium cocoamphodipropionate, surfactin, saponin and mixtures thereof. Preferably, the surfactant is selected from surfactin and saponin and mixtures thereof.

Advantageously, when the adhesive comprises a surfactant, e.g., surfactin, a particularly effective impregnation of the seeds can be obtained.

The amount of the surfactant may be in the range from 0.01% by weight to 30% by weight of the adhesive, preferably, from 0.1% by weight to 15% by weight of the adhesive.

In addition, other substances such as aluminium chloride and boric acid as a crosslinking agent can improve the adhesive properties of adhesives formulations. The adhesive of the invention can be produced by mixing the different components according to techniques that are, per se, known in the art.

Advantageously, the adhesive composition of the present invention is suitable to be used in combination with several coating materials, both when the adhesive composition is used in seed coating or in the production of a granules and microgranules, particularly as a binder.

One or more coating material can be selected from at least one inert carrier (such as talc or graphite), at least one colorant, at least one fungicide, at least one bio-fungicide, at least one insecticide, at least one bio-insecticide, at least one nematicide, at least one bio-nematicide, at least one fertiliser, for example a plant biostimulant and mixtures thereof.

In embodiments, the fungicide is selected from copper, mercury, tin, zinc, metallic and sulfur compounds, organophosphorus compounds, dithiocarbamates, carbamates, halogenated hydrocarbons, aromatic nitrocompounds, quinines, anilides, guanidine compounds, phthalimides, pyrimidines, thiodiazoles, triazines, isoxazolones, imidazoles, antibiotics, oils, aldehydes, ketones, oxides and mixtures thereof.

In embodiments, the bio-fungicide is selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the bio-fungicide is selected from bioactive compounds derived from one or more microorganisms selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the insecticide is selected from organochlorine, organophosphate, carbamate, pyrethroid, neonicotinoid, ryanoid and avermectin, and mixtures thereof. In embodiments, the bio-insecticide is selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the bio-insecticide is selected from bioactive compounds derived from one of more microorganisms selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the nematicide is selected from organophosphate, carbamate and mixtures thereof.

In embodiments, the bio-nematicide is selected from *Pasteuria* spp., *Bacillus* spp., *Paecilomyces* spp., and mixtures thereof.

In embodiments, the bio-nematicide is selected from bioactive compounds derived from one of more microorganisms selected from *Pasteuria* spp., *Bacillus* spp., *Paecilomyces* spp., and mixtures thereof.

In embodiments, the fertiliser is selected from organic, organo-mineral and inorganic macronutrients, inorganic micronutrients, liming materials, organic and inorganic soil improvers, growing mediums, nitrification, denitrification and urease inhibitors, microbial and non-microbial plant biostimulants, and mixtures thereof.In embodiments, the microbial plant biostimulant may be selected from *Trichoderma harzianum,* clay-embedded *Glomus iranicum* var. *tenuihypharum* var. nov. and mixtures thereof.

In embodiments, the coating material may be selected from microbial plant biostimulant (e.g., *Trichoderma harzianum,* clay-embedded *Glomus iranicum* var. *tenuihypharum* var. nov.), organo-mineral fertiliser based on amino acids, and mixtures thereof.

Also object of the invention is, thus, the use of the adhesive according to the invention in seed coating.

The adhesive can be provided to seeds, optionally together with one or more coating material, using techniques that are, per se, known in the art, for example, using a SATEC CONCEPT ML 2000 equipment (Satec Equipment GmBh, Elmshorn, Germany).

The plant extract can be provided to an inert material, optionally together with one or more coating material, in order to obtain granules and microgranules. Granules and microgranules can be obtained using techniques that are, per se, known in the art, for example, using fluid bed technology. This technique consists of adding particles to an air current, remaining in suspension. From the top, a liquid is sprayed into the fluid bed. Particles in contact with the liquid become wet and sticky. Sticky particles collide with other particles and adhere to them, forming granules or microgranules depending on their final size.

Another object of the invention is, thus, the use of the adhesive according to the invention in the production of granules and microgranules.

Particularly, in embodiments, the adhesive composition of the invention is used as a binder in the production of granules and microgranules, to provide an inert core with one or more coating materials.

According to embodiments, the inert material to be used as inert core in a granule or microgranule is selected from silicon oxides as diatomite and graded sands, calcium oxides as hydrated lime, sulphates as gypsum, carbonates as calcite, silicates as talc, pyrophyllite and clays.

Another object of the invention is a seed or an inert core material provided with the adhesive of the invention.

A further object of the invention is a coated seed or a granule or microgranule, wherein the coated seed or the granule or microgranule comprises the adhesive of the invention and at least one coating material.

One or more coating material can be selected from at least one inert carrier (such as talc or graphite), at least one colorant, at least one fungicide, at least one bio-fungicide, at least one insecticide, at least one bio-insecticide, at least one nematicide, at least one bio-nematicide, at least one fertiliser, for example a plant biostimulant, and mixtures thereof.

In embodiments, the fungicide is selected from copper, mercury, tin, zinc, metallic and sulfur compounds, organophosphorus compounds, dithiocarbamates, carbamates, halogenated hydrocarbons, aromatic nitrocompounds, quinines, anilides, guanidine compounds, phthalimides, pyrimidines, thiodiazoles, triazines, isoxazolones, imidazoles, antibiotics, oils, aldehydes, ketones, oxides and mixtures thereof.

In embodiments, the bio-fungicide is selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the bio-fungicide is selected from bioactive compounds derived from one or more microorganisms selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the insecticide is selected from organochlorine, organophosphate, carbamate, pyrethroid, neonicotinoid, ryanoid and avermectin.

In embodiments, the bio-insecticide is selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the bio-insecticide is selected from bioactive compounds derived from one of more microorganisms selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the nematicide is selected from organophosphate, carbamate and a mixture thereof.

In embodiments, the bio-nematicide is selected from *Pasteuria* spp., *Bacillus* spp., *Paecilomyces* spp., and mixtures thereof.

In embodiments, the bio-nematicide is selected from bioactive compounds derived from one of more microorganisms selected from *Pasteuria* spp., *Bacillus* spp., *Paecilomyces* spp., and mixtures thereof.

In embodiments, the fertiliser is selected from organic, organo-mineral and inorganic macronutrients, inorganic micronutrients, liming materials, organic and inorganic soil improvers, growing mediums, nitrification, denitrification and urease inhibitors, microbial and non-microbial plant biostimulants, and mixtures thereof.

In embodiments, the microbial biostimulant may be selected from *Trichoderma harzianum,* clay-embedded *Glomus iranicum* var. *tenuihypharum* var. nov. and mixtures thereof.

In embodiments, the coating material may be selected from microbial plant biostimulant (e.g., *Trichoderma harzianum.* clay-embedded *Glomus iranicum* var. *tenuihypharum* var. nov.), organo-mineral fertiliser based on amino acids, and mixtures thereof.

In embodiments, the seed is selected from extensive crop seeds and horticultural crops seeds. For example, suitable extensive crop seed are corn seeds, wheat seeds, soybean seeds, cotton seeds, sunflower seeds, rice seeds, alfalfa seeds and canola seeds. For example, suitable horticultural crops seeds are lettuce seeds, garlic seeds, carrot seeds and tomato seeds. In embodiments, the seed can be selected from a corn seed, a wheat seed, a soybean seed, a cotton seed, a sunflower seed, a rice seed, an alfalfa seed, a canola seed, a lettuce seed, a garlic seed, a carrot seed and a tomato seed. For example, the seed may be a corn seed, a soybean seed, a cotton seed or a wheat seed. Additional advantageous features of the invention will be apparent from the following, non-limiting, experimental section.

Brief description of the Figures

Figure 1: Appearance of the eucalyptus extract with high solids content.
Figure 2: Dimensions of the textile material test samples and scheme of the T-peel test.
Figure 3: Typical T-peel force-displacement curves of textile material/adhesive/textile material joints.
Figure 4: Dimensions of the textile substrate and region where the adhesive is applied for making the joints for single lap-shear adhesion test.
Figure 5: Scheme of the procedure for making the adhesive joints for single lap-shear adhesion test.
Figure 6: Adhesive joint specimen for single lap-shear adhesion test.
Figure 7: Typical shear force-displacement curves of the textile material/adhesive/textile material joints.
Figure 8: Satec Concept ML 2000 laboratory rotary coater.
Figure 9: Heubach test measurement equipment (Heubach DUSTMETER Gmbh, Salzburg, Austria).
Figure 10: Variation of Brookfield viscosity of the liquid eucalyptus extract-based adhesives as a function of the shear rate.
Figure 11: ATR-IR spectra of the solid eucalyptus extract-based adhesives.
Figure 12: 2600-3700 $cm^{-1}$ region of the ATR-IR spectra of the solid eucalyptus extract-based adhesives.
Figure 13: 1550-1800 $cm^{-1}$ region of the ATR-IR spectra of the solid eucalyptus extract-based adhesives.
Figure 14: 1200-1550 $cm^{-1}$ region of the ATR-IR spectra of the solid eucalyptus extract-based adhesives.
Figure 15: TGA curves of the solid eucalyptus extract-based adhesives.
Figure 16: TGA curve of lactic acid (AcL).
Figure 17: TGA curve of DMSO.
Figure 18: DTGA curves of the solid eucalyptus extract-based adhesives.
Figure 19: DTGA curve of lactic acid (AcL).
Figure 20: DTGA curve of DMSO.
Figure 21: Appearance of the adhesive joints made with textile materials and eucalyptus extract-based adhesives, after T-peel test.
Figure 22: Shear stress-displacement curves of the textile material/adhesive/textile material joints made with the eucalyptus extract-based adhesives.
Figure 23: Appearance of the adhesive joints made with textile materials and eucalyptus extract-based adhesives, after single lap-shear test.
Figure 24. Germination percentage (%) of corn seeds treated with different eucalyptus extract (EE) -based adhesives and AcL and DMSO co-formulants, with and without clay-embedded *Glomus iranicum* var. *tenuihypharum* var. nov., after 48 hours of incubation with water. Seeds treated with water were used as control.

Experimental section

Example 1 - Improved adhesion and impregnation ability of vegetable seeds to different coating compounds by using eucalyptus extract-based natural adhesives

1. Raw materials

Eucalyptus extract (EE).

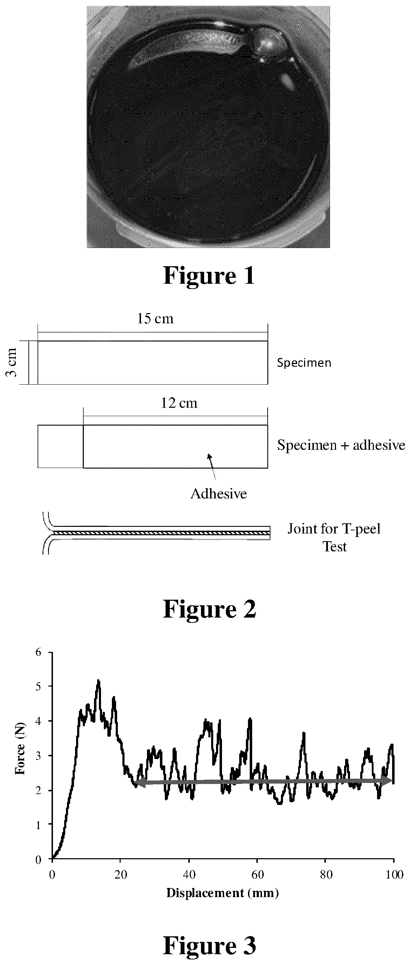

The soluble phenolic compounds that result from secondary metabolism of the bark of plants have potential application as natural adhesives. A concentrated eucalyptus wood-hot water-extraction residue with high solids content (higher than 50 wt.% according to the manufacturer) supplied by BETANZOS HB S.L (A Coruña, Spain) has been selected in this study (Figure 1). This eucalyptus extract is mainly composed of pectin (13 wt.%), lignin (23 wt.%) and polysaccharides (41 wt.%).
Different additives were added to the eucalyptus extract for obtaining different adhesives.

Lactic acid (AcL).

Ecological lactic acid Pharma grade with 90.8 wt.% purity and less than 95 % S-enantiomer was supplied by Panreac (Barcelona, Spain).

Dimethylsulfoxide (DMSO).

DMSO with purity of 99.99 % - analytical grade - was supplied by Carlo Erba Reagents (Sabadell, Spain).
Clay-embedded *Glomus iranicum* var. *tenuihypharum* var. nov. (Resid HC) supplied by Symborg S.L., Murcia, Spain.
*Trichoderma harzianum* (Trichosym Bio) supplied by Symborg S.L., Murcia, Spain.
Amino acids (Climax) supplied by Symborg SL, Murcia, Spain.

2. Used eucalyptus extract-based adhesives

• Adhesive made with eucalyptus extract - EE

• Adhesive made with eucalyptus extract and lactic acid - EE/AcL

• Adhesive made with eucalyptus extract and DMSO - EE/DMSO

• Adhesive made with eucalyptus extract, lactic acid and DMSO - EE/AcL/DMSO

The adhesives, i.e., the adhesive compositions can be produced as aqueous mixtures by admixing the different components in water.
Table 1 shows the composition by weight (percentage) of the eucalyptus extract-based adhesives.

**Table 1.** Nomenclature and composition in solid content percentage (EE) and percentage by weight (AcL, DMSO and $H_2O$) of the eucalyptus extract-based adhesives.

| Adhesive | EE (%) | AcL (%) | DMSO (%) | $H_2O$ (%) |
|---|---|---|---|---|
| EE | 20-80 | - | - | add to complete 100% |
| EE/AcL | 20-80 | 0.01-10 | - | add to complete 100% |
| EE/DMSO | 20-80 | - | 1-30 | add to complete 100% |
| EE/AcL/DMSO | 20-80 | 0.01-10 | 1-30 | add to complete 100% |

3. Experimental techniques

*Solids content.* 3 g wet adhesive were placed in an open container and placed in an oven at 80 °C for 48 h. After 48 h, the container was removed from the oven and allowed to cool down at room temperature. Then, the container was weighed and the solids content of the adhesive was evaluated by using Equation (1).

$$Solids\ content\ (\%) = \frac{m_d}{m_w} x\ 100 \qquad\qquad Equation\ (1)$$

where $m_d$ is the dried adhesive mass and $m_w$ is the initial mass of adhesive.
Three replicates were carried out and the results obtained were averaged.
*pH measurement.* The pH values of the eucalyptus extract-based adhesives were measured at 25 °C in a pH-meter XS PC510 (Eutech Instruments Pte. Ltd, Landsmeer, Netherlands), using Ag/AgCl reference electrode (Metria model PHEL-GB1-001). Before measurement, the pHmeter was calibrated by using two standard buffer solutions of pH 4.0 and 7.0. Three measurements were carried out and averaged.

*Brookfield viscosity.* The Brookfield viscosities of the eucalyptus extract-based adhesives were measured at room temperature according to ASTM D3236-88 standard in a Brookfield RD DV-I Prime viscometer (Brookfield Engineering Laboratories Inc., Stoughton, EEUU). The shear rate was varied from 0.1 s$^{-1}$ to 4 s$^{-1}$ and S-61 spindle was used. 120 mL adhesive were placed into 150 mL closed container (to avoid water evaporation) and the spindle was inserted, starting the measurement from lower to higher shear rates until the viscometer went off scale. Three measurements were carried out and averaged.

*Surface tension.* The surface tensions at room temperature of the eucalyptus extract-based adhesives were measured in a Phywe tensiometer (Phywe System Gmgh, Gottingen, Germany) equipped with a 19.5 mm diameter metal ring. The DuNouy ring method was used. The ring was placed in contact with the surface of the adhesive solutions placed in a Petri dish (10 cm diameter × 1 cm depth), measuring the force necessary to separate it. The surface tension ($\gamma$) was calculated by using equation (2).

$$\gamma = \frac{F}{4\pi r} \qquad Equation\ (2)$$

where F is the force required to remove the ring from the liquid adhesive surface and r is the radius of the ring. Three measurements were carried out and averaged.

*Infrared spectroscopy in attenuated total reflectance mode (ATR-IR spectroscopy).* ATR-IR spectroscopy was used to characterize the chemical composition of the solid eucalyptus extract-based adhesives. The ATR-IR spectra were obtained in an Alpha spectrometer (Bruker Optik GmbH, Ettlinger, Germany) using a germanium prism. The incident angle of the IR beam was 45° and 50 scans were performed with a resolution of 4 cm$^{-1}$. To compare the ATR-IR spectra, they were normalized to the most intense band (C-O-C stretching band at about 1100 cm$^{-1}$).

*Thermal Gravimetric Analysis (TGA).* The thermal stability and the structure of the solid eucalyptus extract-based adhesives were assessed in a TGA Q500 equipment (TA Instruments, New Castle, DE, USA) under nitrogen atmosphere (flow: 50 mL/min). 5-10 mg sample were placed in a platinum crucible and heated from 25 °C to 800 °C by using a heating rate of 10 °C/min.

*T-peel test.* The intrinsic adhesion of the eucalyptus extract-based adhesives was evaluated by T-peel test of 100 % cotton textile material/adhesive/100 % cotton textile material joints; the dimensions of the textile material test samples were 15 cm long and 3 cm width (Figure 2).

For making the adhesive joints, the adhesive was applied with a round tin end brush no. 20 on each test piece over a length of 12 cm (Figure 2), the specimens were allowed to dry at room temperature for 1 hour. Then, a second layer of liquid adhesive was applied on both test specimens, and they were placed in contact, and a 2 kg rubber roller was passed 5 times over the joint without exerting pressure. The joint was left to dry for 72 hours, weighed (for determining the adhesive coverage), and tested in a Zwick/Roell Z005 universal testing machine (San Cugat del Vallés, Spain), a cross-head speed of 10 mm/min was used.

During the T-peel adhesion test, a curve of force versus displacement is obtained (Figure 3). The value of the T-peel adhesion force was taken as the average between 25 and 100 mm of displacement (the double arrow in Figure 3), using the central values to minimize errors. T-peel strength values were expressed as N/m and were calculated as the ratio of the average force to the peeled adhesive front (0.03 m).

The adhesion of the textile material/adhesive/textile material joints was expressed by the T-peel strength value and the locus of failure.

There are three main kinds of loci of failure in the adhesive joints: adhesion failure (A), cohesive failure of the adhesive (C), and cohesive failure of the substrate (S).

- Adhesion failure (A): The adhesive separates from one of the substrates (separation at the substrate-adhesive interface).

- Cohesive failure of the adhesive (C): The rupture is produced within the adhesive layer. This failure is obtained when the cohesion of the adhesive is lower than the one of the substrates, and the adhesion between the adhesive and the substrate surface.

- Cohesive failure of the substrate (S): The substrate is broken during the adhesion test. This failure is obtained when the cohesion of the substrate is lower than the one of the adhesive and the adhesion between the adhesive and the substrate surface.

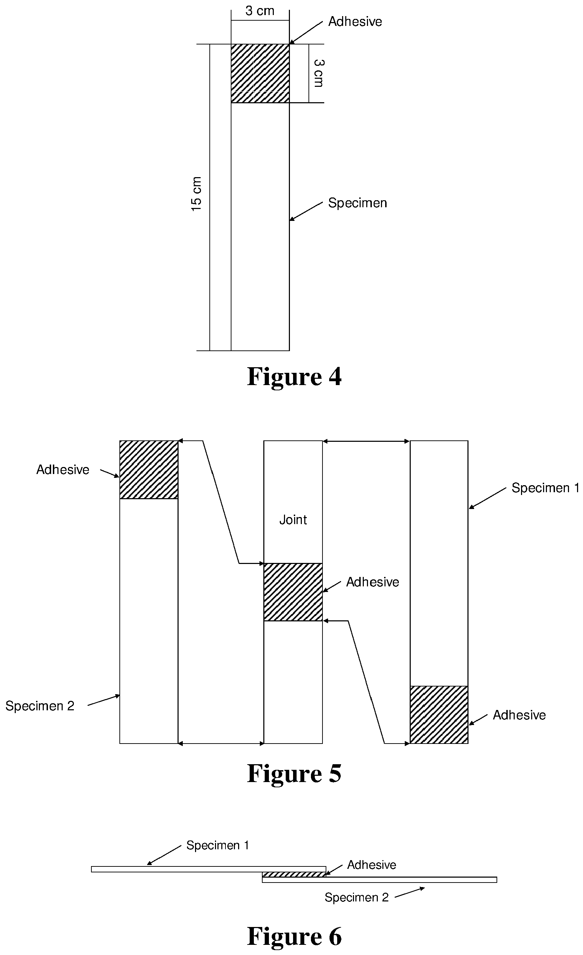

**Single lap-shear adhesion test.** The single lap-shear adhesion test was carried out in joints made with 100% cotton textile materials of dimensions 15 cm long and 3 cm with and the eucalyptus extract-based adhesives. For making the adhesive joints, two textile materials are required and the adhesive is applied on a surface of 3 cm $\times$ 3 cm on one side each substrate (Figure 4).

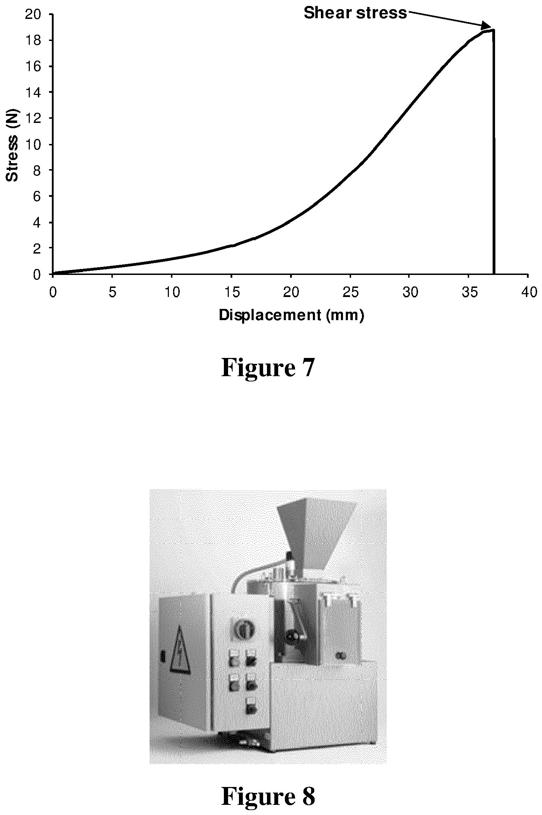

The adhesive joints were made by applying the adhesive with a number 12 quadruple trowel on both textile substrates on a surface of 3 cm $\times$ 3 cm (Figure 5). After applying the adhesive, it was left to dry at room temperature for 1 hour and, then, another layer of liquid adhesive was applied. Immediately afterwards the two coated textile materials with adhesive were placed in contact and press by hand, the joint was left to dry at room temperature for 2 h. Then, a weight of 950 g (equivalent to a pressure of 449.3 Pa) was applied on top for another 2 h, and the adhesive left to cure for 72-144 h (Figure 6). The single lap-shear adhesion test was carried out in a Zwick/Roell Z005 universal testing machine (San Cugat del Vallés, Spain), a cross-head speed of 10 mm/min was used. A curve of shear stress in N versus displacement in mm was obtained (Figure 7) and the maximum value was taken for calculation of the shear strength. The single lap-shear strength was expressed in MPa and was obtained by dividing the shear stress in N by the adhesive area ($9 \times 10^{-6}$ m$^2$). Three replicates for each adhesive joint were carried out and averaged.

There are three main kinds of loci of failure in the adhesive joints: adhesion failure (A), cohesive failure of the adhesive (C), and cohesive failure of the substrate (S).

- Adhesion failure (A): The adhesive separates from one of the substrates (separation at the substrate-adhesive interface).
- Cohesive failure of the adhesive (C): The rupture is produced within the adhesive layer. This failure is obtained when the cohesion of the adhesive is lower than the one of the substrates, and the adhesion between the adhesive and the substrate surface.
- Cohesive failure of the substrate (S): The substrate is broken during the adhesion test. This failure is obtained when the cohesion of the substrate is lower than the one of the adhesive and the adhesion between the adhesive and the substrate surface.

### *Procedure of impregnation of the seeds with eucalyptus extract-based adhesives*

The impregnation of different seeds (corn, soybean, wheat, cotton) with different compounds (clay-embedded *Glomus iranicum* var. *tenuihypharum* var. nov. (Resid HC, Symborg S.L., Murcia, Spain), *Trichoderma harzianum* (Trichosym Bio, Symborg S.L., Murcia, Spain), amino acids (Qlimax, Symborg S.L., Murcia, Spain)) by using the eucalyptus extract-based adhesives was carried out in a SATEC CONCEPT ML 2000 equipment (Satec Equipment GmBh, Elmshorn, Germany) with a capacity of 0.5-2.5 dm$^3$ (Figure 8).

Impregnation of the seeds with clay-embedded *Glomus iranicum* var. *tenuihypharum* var. nov.. 400 g seeds were placed into the laboratory coater, the equipment was turned on at maximum power and the adhesive and the clay-embedded *Glomus iranicum* var. *tenuihypharum* var. nov. were added alternately and continuously, little by little, in several cycles, the final addition was made with the remaining adhesive.

  ◦ For the impregnation of the corn and cotton seeds, 2 g clay-embedded *Glomus iranicum* var. *tenuihypharum* var. nov. and 2 mL adhesive diluted with 2.8 mL water were used.
  ◦ For the impregnation of the wheat seeds, 0.2 g clay-embedded *Glomus iranicum* var. *tenuihypharum* var. nov. and 1 mL adhesive diluted with 3.8 mL water were used.
  ◦ For the impregnation of the soybean seeds, 0.7 g clay-embedded *Glomus iranicum* var. *tenuihypharum* var. nov. and 1 mL adhesive diluted with 3 mL water were used.

Impregnation of the seeds with *Trichoderma harzianum.*

*Trichoderma harzianum* was added into the adhesive. Separately, 500 g seeds were placed into the laboratory coater, the equipment was turned on at maximum power and the *Trichoderma* harzianum+adhesive mixture diluted with water was added continuously, little by little, in several cycles.

  ◦ For the impregnation of the corn and cotton seeds, 2 mL *Trichoderma harzianum* and 0.5 mL adhesive diluted with 2.5 mL water were used.
  ◦ For the impregnation of the wheat seeds, 0.2 mL *Trichoderma harzianum* and 0.5 mL adhesive diluted with 4.3 mL water were used.
  ◦ For the impregnation of the soybean seeds, 0.7 mL *Trichoderma harzianum* and 0.5 mL adhesive diluted with 3.8 mL water were used.

Impregnation of the seeds with amino acids.

Aminoacids were added into the adhesive to. Separately, 500 g seeds were placed into the laboratory coater, the equipment was turned on at maximum power and the amino acids+adhesive mixture diluted with water was added continuously, little by little, in several cycles. All seeds were impregnated with 0.5 mL of amino acids and 0.5 mL of adhesive diluted with 2 mL water.

**Dust emission values of the impregnated seeds (*Heubach test*)**

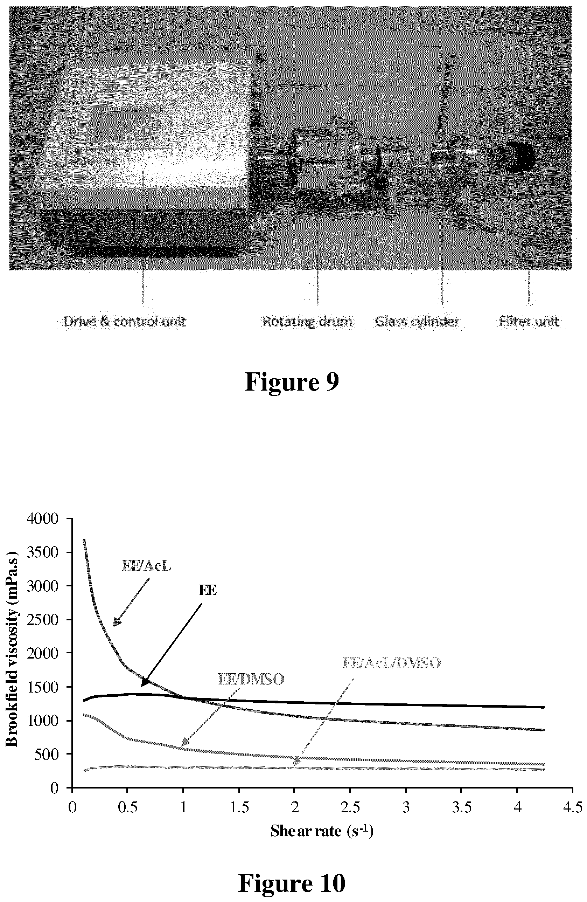

After 48 h of the impregnation of the seeds, the Heubach test was carried out in a Dustmeter equipment (Heubach DUSTMETER Gmbh, Salzburg, Austria) (Figure 9). The equipment consists of a control unit that allows entering the test parameters, a rotating drum with steel blades, a glass bottle and a container with a fiberglass filter (Whatman GF 92 or Macherey Nagel Type MN 85/70 BF or equivalent specification). The parameters used to carry out the Heubach test of the impregnated corn seeds were as follow: Rotation speed: 30 rpm; air flow: 20 L/min; test time: 120 seconds.

To carry out the Heubach test, 100 g impregnated dry seeds were placed into the rotating drum, the equipment was assembled, and the test started. The values obtained were expressed in g powder/100 kg impregnated seeds, calculated according to equation (3).

$$dust\ emission\left(\frac{g}{100\ kg\ seeds}\right) = \frac{(m_f - m_i)x10^5}{m_{seeds}} \qquad Equation\ (3)$$

where $m_f$ is the final mass of filter and housing, $m_i$ is the initial mass of filter and housing, and $m_{seeds}$ is the mass of the impregnated seeds (100 g).

For each impregnated seed, 4 replicates were made and averaged.

4. Results and discussion

Structural properties of the liquid eucalyptus extract-based adhesives

Table 2 shows some properties of the liquid eucalyptus extract-based adhesives. The solids contents of the liquid EE and EE/AcL adhesives are 45-46 % and the liquid adhesives containing DMSO have slightly higher solids contents because the existence of some residual DMSO. The addition of AcL decreases the pH and the Brookfield viscosity, and increases the surface tension of the liquid EE adhesive. The addition of DMSO increases the pH value, and decreases noticeably the Brookfield viscosity and the surface tension of the liquid EE adhesive. The addition of both DMSO and AcL decreases noticeably the Brookfield viscosity of the liquid adhesives without important changes in the pH and surface tension values. Therefore, the addition of both DMSO and AcL changes differently the properties of the liquid EE adhesive with respect to the individual addition of AcL or DMSO.

**Table 2.** Some properties of the liquid eucalyptus extract-based adhesives. The Brookfield viscosity has been measured at a shear rate of 4 s$^{-1}$.

| Adhesive | Solids content (%) | pH | Brookfield viscosity (mPa.s) | $\Upsilon$ (mN/m) |
|---|---|---|---|---|
| EE | 46 $\pm$ 1 | 3.5 | 1192 | 52 |
| EE/AcL | 45 $\pm$ 1 | 2.1 | 849 | 62 |
| EE/DMSO | 49 $\pm$ 1 | 4.5 | 349 | 40 |
| EE/AcL/DMSO | 48 $\pm$ 1 | 2.5 | 244 | 56 |

The rheological behavior of the liquid EE adhesive is Newtonian (i.e., the viscosity does not change with the shear rate) (Figure 10). The addition of AcL or DMSO changes the rheological behavior of the liquid EE adhesive to shear thinning (i.e., the viscosity decreases by increasing the shear rate), more noticeably in the liquid EE/AcL adhesive. The shear thinning can be ascribed to the separation and/or fragmentation of the polymeric chains in EE; this indicates that the addition of AcL or DMSO changes its structure in a different manner for each additive. Furthermore, the Brookfield viscosities of the liquid EE/AcL and EE/DMSO adhesives are lower than the one of the liquid EE adhesive, the decrease is more marked in the liquid EE/DMSO adhesive. However, the addition of both DMSO and AcL maintains the Newtonian rheological behavior of the liquid EE adhesive, but the viscosity decreases markedly. Therefore, the addition of both DMSO and AcL changes differently the rheological properties of the liquid EE adhesive with respect to the individual addition of AcL or DMSO.

Structural properties of the solid eucalyptus extract-based adhesives

After drying the liquid eucalyptus extract-based adhesives, solid materials were obtained and characterized.

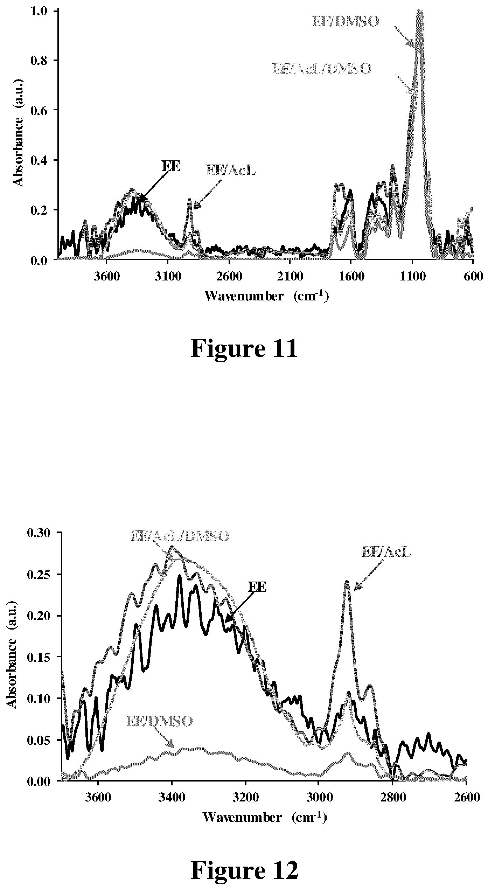

Figure 11 shows the ATR-IR spectra of the solid eucalyptus extract-based adhesives, and Table 3 shows the assignment of the main absorption bands. All ATR-IR spectra show the same absorption bands, except the S=O stretching bands at 952 and 1043-1045 $cm^{-1}$ due to DMSO that appear only in the EE/AcL/DMSO and EE/DMSO adhesives. However, there are differences in the intensities and the wavenumbers of some bands in the C-O-C (1017-1153 $cm^{-1}$), C=O (1645-1731 $cm^{-1}$) and C=C (1600-1609 $cm^{-1}$) regions of the ATR-IR spectra of the adhesives.

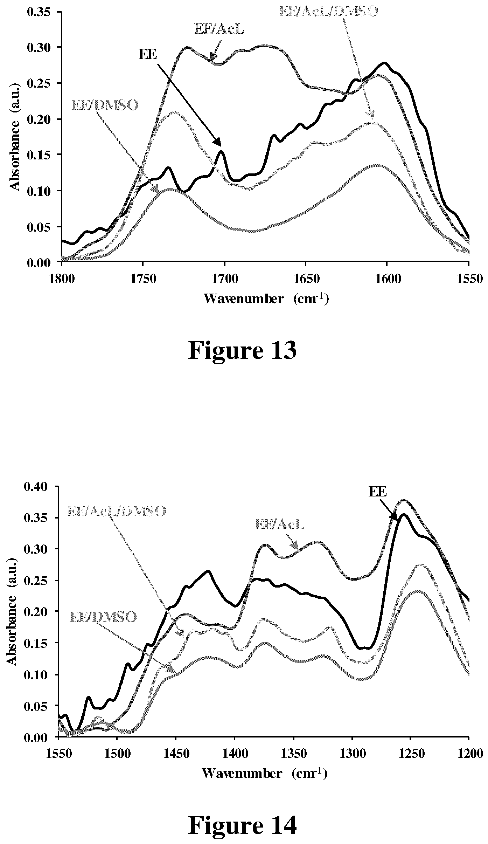

The addition of AcL to the EE adhesive increases notably the intensities of the C-H stretching bands at 2846-2855 and 2919-2925 $cm^{-1}$ (Figure 12), and new C=O bands appears at 1719 $cm^{-1}$ (due to lactic acid) and 1738 $cm^{-1}$ (Figure 13); furthermore, the intensities of the $C-CH_3$ bending at 1372 $cm^{-1}$ (due to lactic acid) and the carboxylic acid salt bands at 1326 $cm^{-1}$ increase (Figure 14). These changes can be better exhibited by the lower values of the Ic=c/Ic=o (Table 4) and $I_{C-O-C}/I_{C-CH3}$ (Table 5) ratios in the EE/AcL adhesive with respect to the EE adhesive. Whereas the increase of the intensity of the C=O band at 1719 $cm^{-1}$ in the ATR-IR spectrum of the EE/AcL adhesive can be expected, the changes in the C-H bands are not, this may indicate structural changes in the EE adhesive by adding AcL.

The addition of DMSO to the EE adhesive increases the intensity of the C-H stretching band at 2919-2925 $cm^{-1}$ with respect to the one at 2846-2855 $cm^{-1}$ (Figure 12), and decreases the Ic=c/Ic=o value (Table 4) and increases the $I_{C-O-C}/I_{C-CH3}$ value (Table 5) Therefore, the addition of DMSO changes the structure of the eucalyptus extract-based adhesive.

**Table 3.** Assignment of the main absorption bands of the ATR-IR spectra of the solid eucalyptus extract-based adhesives.

| Wavenumber ($cm^{-1}$) | Assignment |
| --- | --- |
| 3366-3404 | O-H stretching |
| 2846-2855, 2919-2925 | C-H stretching |
| 1645-1702, 1719, 1731-1738 | C=O stretching |
| 1600-1609 | C=C stretching |
| 1423-1434 | O-H bending |
| 1372-1375 | $C-CH_3$ bending |
| 1315-1326 | Carboxylic acid salt |
| 1241-1256 | C-O-C stretching in ring |
| 1017, 1073-1085, 1110-1116,1150-1153 | C-O stretching |
| 1043-1045, 952 | S=O stretching |

The addition of both AcL and DMSO maintains the structural changes of the EE adhesive caused by adding AcL or DMSO, except a lower increase of the intensity of the C-H stretching bands (Figure 12) and a higher $I_{C-O-C}/I_{C-CH3}$ (Table 5) ratio value are found in the EE/AcL/DMSO adhesive. Therefore, the addition of both DMSO and AcL changes the structure of the eucalyptus extract-based adhesive in a different manner than by adding only DMSO or AcL.

**Table 4.** Ratio of the intensities of the C=O and C=C bands of the ATR-IR spectra of the solid eucalyptus extract-based adhesives.

| Adhesive | Bands wavenumbers ($cm^{-1}$) | $I_{C=C}/I_{C=O}$ |
| --- | --- | --- |
| **EE** | 1600/1731 | 2.1 |

(continued)

| Table 4. Ratio of the intensities of the C=O and C=C bands of the ATR-IR spectra of the solid eucalyptus extract-based adhesives. | | |
|---|---|---|
| Adhesive | Bands wavenumbers (cm-1) | $I_{C=C}/I_{C=O}$ |
| **EE/AcL** | 1608/1719 | 0.9 |
| **EE/DMSO** | 1607/1734 | 1.4 |
| **EE/AcL/DMSO** | 1609/1734 | 0.9 |

| Table 5. Ratio of the intensities of the C-O-C and C-CH$_3$ bands of the ATR-IR spectra of the solid eucalyptus extract-based adhesives. | | |
|---|---|---|
| Adhesive | Bands wavenumbers (cm-1) | $I_{C-O-C}/I_{C-CH3}$ |
| **EE** | 1256/1372 | 1.4 |
| **EE/AcL** | 1256/1374 | 1.2 |
| **EE/DMSO** | 1244/1374 | 1.6 |
| **EE/AcL/DMSO** | 1241/1375 | 1.5 |

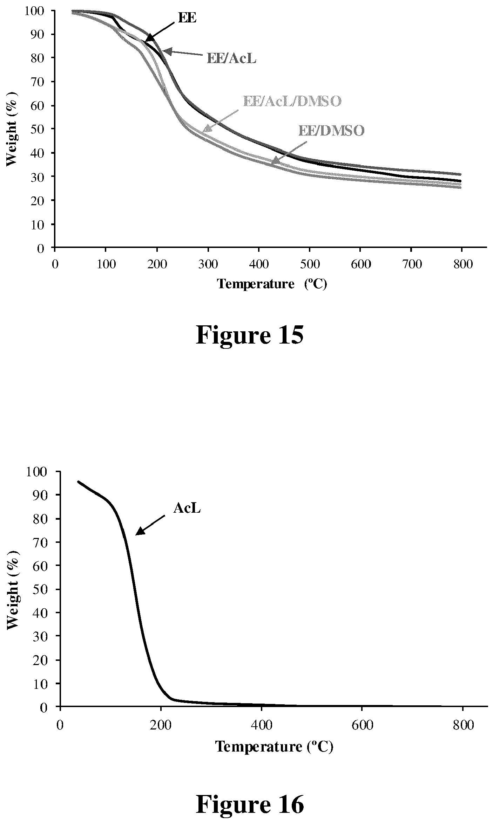

Figure 15 shows the TGA curves of the solid eucalyptus extract-based adhesives. The addition of AcL increases the thermal stability of the EE adhesive, mainly for temperatures below 230 °C, this trend agrees well with the increase of the temperatures at which 5% ($T_{5\%}$) and 50 % ($T_{50\%}$) mass is lost in the EE/AcL adhesive (Figure 15, Table 6). In fact, the TGA curve of the lactic acid shows one thermal decomposition only below 200°C (Figure 16), and the $T_{5\%}$ value is 40 °C and the one of $T_{50\%}$ is 148 °C, they are lower than the ones in the EE/AcL adhesive. Therefore, the addition of AcL changes the structure of the EE adhesive because the thermal decomposition associated to AcL of the EE/AcL adhesive is produced at higher temperatures.

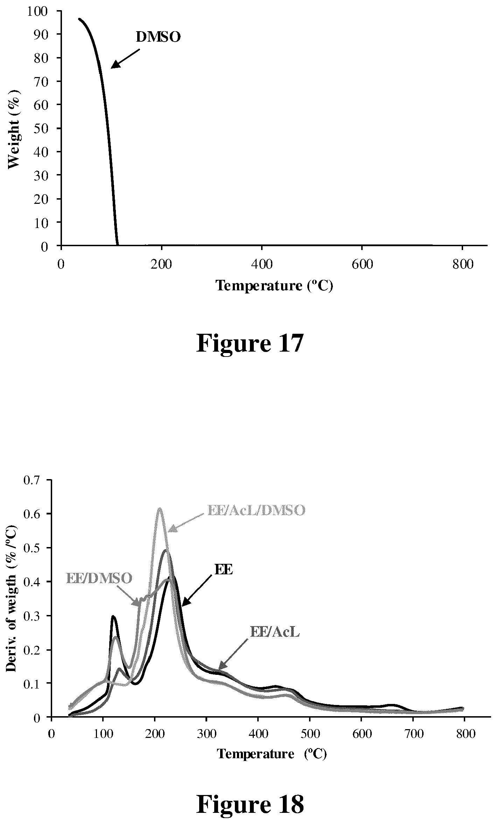

The addition of DMSO decreases the thermal stability of the EE adhesive, this decrease agrees with the decrease of the $T_{5\%}$ and $T_{50\%}$ values in the EE/DMSO adhesive (Figure 15, Table 6). The TGA curve of DMSO shows one thermal decomposition only below 110 °C (Figure 17), and the $T_{5\%}$ value is 45 °C and the one of $T_{50\%}$ is 93 °C, they are lower than the ones in the EE/DMSO adhesive. Therefore, the addition of DMSO changes the structure of the EE adhesive.

| Table 6. Temperatures at which 5 % ($T_{5\%}$) and 50 % ($T_{50\%}$) mass is lost in the solid eucalyptus extract-based adhesives. TGA experiment. | | |
|---|---|---|
| Adhesive | $T_{5\%}$ (°C) | $T_{50\%}$ (°C) |
| **EE** | 121 | 338 |
| **EE/AcL** | 142 | 340 |
| **EE/DMSO** | 94 | 261 |
| **EE/AcL/DMSO** | 98 | 274 |

On the other hand, the addition of both DMSO and AcL decreases the thermal stability of the EE adhesive in a similar extent than the addition of only DMSO does, this decrease agrees with the decrease of the $T_{5\%}$ and $T_{50\%}$ values in the EE/AcL/DMSO adhesive (Figure 15, Table 6). Therefore, the addition of both AcL and DMSO changes the structure of the EE adhesive in a different manner than the addition of only AcL or DMSO does, and this indicates different structure.

The structural changes in the eucalyptus extract-based adhesives can be better evidenced in the derivative of the TGA curves (DTGA).

The DTGA curve of the EE adhesive shows one main thermal decomposition at 234 °C (Figure 18) with a weight loss of 34 wt.% (Table 7). Additional small decompositions at 120 °C, 333 °C, 468 °C and 662 °C can be distinguished (Table 7). The addition of AcL decreases the main temperature of decomposition of the EE adhesive from 234 °C to 222 °C and increases the weight loss from 34 wt.% to 39 wt.%

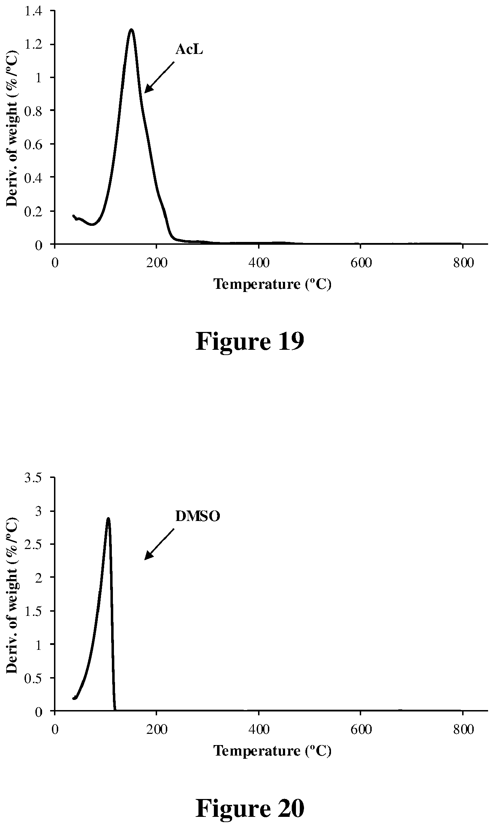

(Figure 18, Table 7). Furthermore, the thermal decomposition at 120 °C in the EE adhesive increases to 132 °C with a decrease of the weight loss (from 12 to 7 wt %) in the EE/AcL adhesive. The DTGA curve of the lactic acid shows one unique thermal decomposition at 150 °C (Figure 19), so the addition of AcL changes the structure of the EE adhesive.

**Table 7.** Temperature and weight loss values of the thermal decompositions of the solid eucalyptus extract-based adhesives. DTGA experiments.

| | EE | | EE/AcL | | EE/DMSO | | EE/AcL/DMSO | |
|---|---|---|---|---|---|---|---|---|
| | Weigh t loss (%) | T (°C) | Weigh t loss (%) | T (°C) | Weigh t loss (%) | T (°C) | Weigh t loss (%) | T (°C) |
| 1$^{st}$ decomposition | 12 | 120 | 7 | 132 | 15 | 124 | 9 | 104 |
| 2$^{nd}$ decomposition | - | - | - | - | 11 | 175-186 | 7 | 163-176 |
| 3$^{rd}$ decomposition | 34 | 234 | 39 | 222 | 30 | 225 | 36 | 210 |
| 4$^{th}$ decomposition | 9 | 333 | 10 | 337 | 8 | 337 | 9 | 336 |
| 5th decomposition | 10 | 468 | 9 | 463 | 11 | 455 | 13 | 462 |
| 6th decomposition | 7 | 662 | 5 | 670 | - | - | - | - |
| | Residue : 28 % | | Residue : 30 % | | Residue : 25 % | | Residue : 26 % | |

The addition of DMSO decreases the thermal decomposition of the EE adhesive from 234 °C to 225 °C and a new thermal decomposition appears at 175-186 °C which is not present neither in EE nor in DMSO (Figure 18, Table 7). In fact, the DTGA curve of DMSO shows one unique thermal decomposition at 104 °C (Figure 20). Therefore, the addition of DMSO changes the structure of the EE adhesive in a different manner that the addition of AcL does.

The addition of both AcL and DMSO decreases the thermal decompositions of the EE adhesive from 234 °C to 210 °C and from 120 °C to 104 °C, and somewhat smaller weight losses are produced (Figure 18, Table 7). These changes are different than the ones produced when only AcL or DMSO are added to the EE adhesive. Therefore, the addition of both AcL and DMSO changes the structure of the EE adhesive in a different manner that the addition of only AcL or DMSO does.

Adhesion properties of the eucalyptus extract-based adhesives

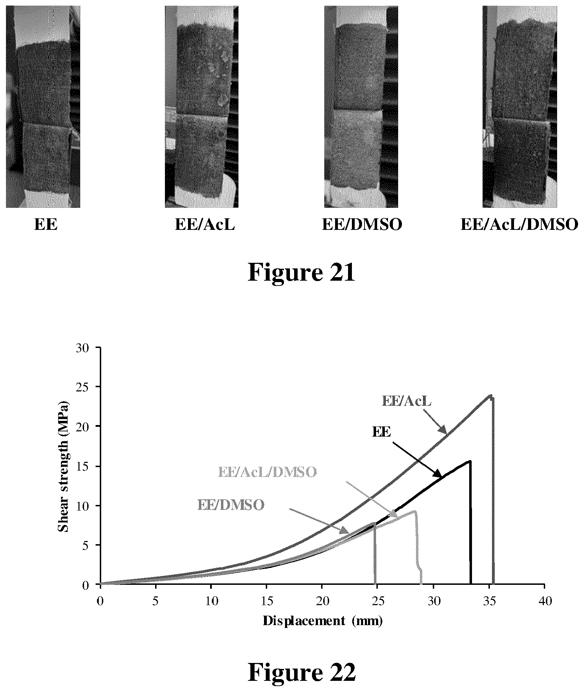

Table 8 shows the T-peel strength values of the textile material/eucalyptus extract-based adhesives/textile material joints. The T-peel strength values in all joints are acceptable. The addition of only AcL decreases the adhesion of EE and the decrease is more pronounced by adding only DMSO. The highest T-peel strength values correspond to the joints made with the EE and EE/AcL/DMSO adhesives and they are similar, this indicates a different structure than in the EE adhesives containing only AcL or DMSO. All joints fail cohesively in the adhesive (Figure 21).

**Table 8.** T-peel strength values and loci of failure of the textile material/eucalyptus extract-based adhesives/textile material joints.

| Adhesive | Adhesive thickness (g/m$^2$) | T-peel strength (N/m) | Locus of failure |
|---|---|---|---|
| EE | 308 | 140 ± 12 | C |
| EE/AcL | 244 | 48 ± 17 | C |
| EE/DMSO | 248 | 17 ± 1 | C |
| EE/AcL/DMSO | 288 | 128 ± 30 | C |

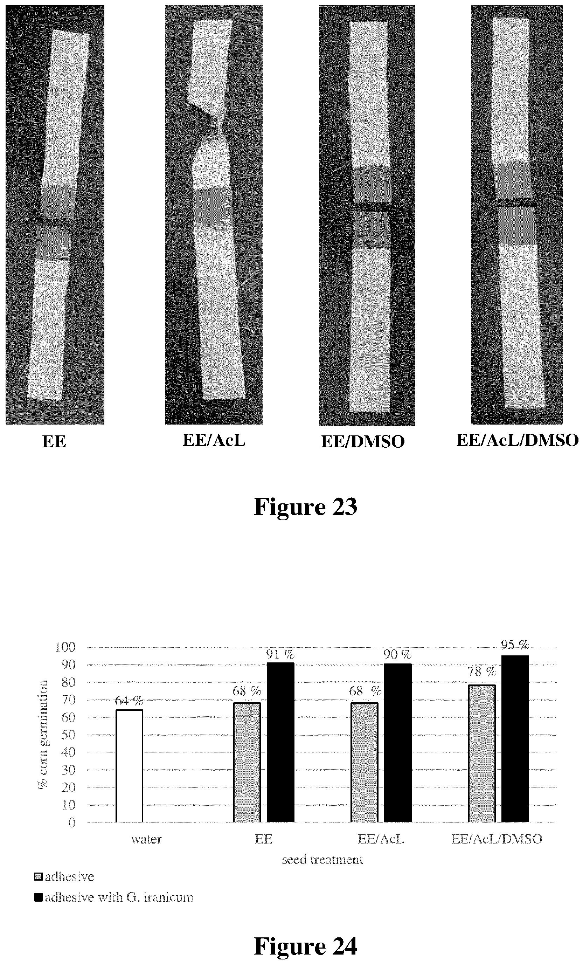

Figure 22 shows the shear stress-displacement curves of the textile substrate/adhesive/textile substrate joints made with the eucalyptus extract-based adhesives, and Table 9 shows the single lap-shear strength values. The addition of lactic acid increases noticeably the shear strength with respect to the one in the joint made with the EE adhesive, and the locus of failure changes from a cohesive failure in the adhesive (C) to substrate rupture (S) (Figure 23), denoting an excellent adhesion. However, the addition of DMSO and both lactic acid and DMSO decreases noticeably and similarly the shear strength, a cohesive failure in the adhesive was produced (Figure 23). However, all joints show high shear strength values.

**Table 9.** Shear strength values and loci of failure of the textile material/eucalyptus extract-based adhesives/textile material joints.

| Adhesive | Thickness (g/m$^2$) | Shear strength (MPa) | Locus of failure |
|---|---|---|---|
| EE | 293 ± 40 | 16.2 ± 2.3 | C |
| EE/AcL | 267 ± 0 | 23.7 ± 0.3 | S |
| EE/DMSO | 204 ± 6 | 7.8 ± 1.3 | C |
| EE/AcL/DMSO | 288 ± 11 | 8.2 ± 0.7 | C |

Dust emissions of different seeds impregnated with different compounds by using the eucalyptus extract-based adhesives

The adhesive capacity of the eucalyptus extract-based adhesives has been evaluated by means of the dust emission values (g/100 kg of seeds) obtained with Heubach test. Table 10 show the dust emission values of different seeds (corn, wheat, soybean, cotton) impregnated with clay-embedded *Glomus iranicum* var. *tenuihypharum* var. nov. by using the eucalyptus extract-based adhesives. The addition of both DMSO and AcL decreases the dust emission values in all seeds. Furthermore, the addition of only AcL decreases the dust emission values in all seeds, except for the soybean seeds (Table 10). The dust emission values depend on the seed, the highest dust emission values correspond to the impregnated corn and cotton seeds, and the lowest dust emission value is found in the impregnated soybean seeds.

**Table 10.** Dust emission values - Heubach test - of corn seeds impregnated with clay-embedded *Glomus iranicum* var. *tenuihypharum* var. nov. by using the eucalyptus extract-based adhesives.

| Adhesive | Dust emission (g/100 kg seeds) | | | |
|---|---|---|---|---|
| | Corn | Wheat | Soybean | Cotton |
| EE | 13.6 ± 0.4 | 5.6 ± 0.3 | 2.8 ± 0.6 | 9.4 ± 0.4 |
| EE/AcL | 9.1 ± 0.4 | 5 ± 0.4 | 2.7 + 0.5 | 6.7 ± 0.01 |
| EE/AcL/DMSO | 8.7 ± 0.2 | 4.1 ± 0.3 | 1.7 ± 0.4 | 6.2 ± 0.3 |

Table 11 shows the dust emission values of different seeds (corn, soybean, cotton, wheat) impregnated with *Trichoderma harzianum* by using the EE/AcL adhesive. All dust emission values are very low; the highest dust emission value corresponds to the impregnated wheat seeds.

**Table 11.** Dust emission values - Heubach test - of different seeds (corn, soybean, cotton and wheat) impregnated with *Trichoderma harzianum* by using the **EE/AcL** adhesive.

| Seed | Dust emission (g/100 kg seeds) |
|---|---|
| Corn | 1.6 ± 0.5 |
| Soybean | 0.6 ± 0.2 |
| Cotton | 1.2 ± 0.2 |
| Wheat | 2.8 ± 0.2 |

Table 12 shows the dust emission values of different seeds (corn, soybean, cotton, wheat) impregnated with amino acids by using the EE/AcL adhesive. The dust emission values are very low in the impregnated soybean and cotton seeds; the highest dust emission value is found in the impregnated wheat seeds.

**Table 12.** Dust emission values - Heubach test - of different seeds (corn, soybean, cotton and wheat) impregnated with amino acids by using the **EE/AcL** adhesive.

| Seed | Dust emission (g/100 kg seeds) |
|---|---|
| Corn | $5.3 \pm 0.7$ |
| Soybean | 0 |
| Cotton | $0.3 \pm 0.1$ |
| Wheat | $2.5 \pm 1.2$ |

**5. Conclusions**

- The solids contents of the liquid eucalyptus extract-based adhesives are 46-49%.
- The eucalyptus extract-based adhesives are efficient for the impregnation of different seeds by using different coating compounds (clay-embedded *Glomus iranicum* var. *tenuihypharum* var. nov., *Trichoderma harzianum,* amino acids).
- The addition of lactic acid decreases the pH and changes the rheological behavior of the eucalyptus extract-based adhesives.
- The addition of DMSO increases the pH, changes the rheological behavior, and decreases the surface tension of the eucalyptus extract-based adhesives.
- The addition of lactic acid changes the structure and increases the thermal stability of the eucalyptus extract-based adhesives.
- The addition of both lactic acid and DMSO decreases significantly the viscosity of the eucalyptus extract-based adhesives, so that the adhesive can be applied to seed in an easier and more homogenous manner. Furthermore, the addition of lactic acid and DMSO changes the structure and decreases the thermal stability of the eucalyptus extract-based adhesives.
- The eucalyptus extract-based adhesives have good intrinsic adhesion under peel stresses and under shear stresses. The best adhesion under peel stresses corresponds to the joints made with the EE and EE/AcL/DMSO adhesives, and the best adhesion under shear stresses corresponds to the joints made with the EE and EE/AcL adhesives.
- The addition of AcL and, more noticeably, the addition of AcL and DMSO reduces significantly the dust emission values in different seeds impregnated with the eucalyptus extract-based adhesives.
- The adhesives can be applied in different seeds such as cotton, soybean, wheat and corn.

Example 2 - Germination of corn seeds impregnated with clay-embeded *Glomus iranicum* var. *tenuihypharum* var. nov. by using eucalyptus extract-based adhesives

1. Raw materials

Eucalyptus extract (EE). A concentrated eucalyptus wood-hot water-extraction residue with high solids content (higher than 50 wt.% according to the manufacturer) supplied by BETANZOS HB S.L (A Coruña, Spain) has been selected in this study. This eucalyptus extract is mainly composed of pectin (13 wt.%), lignin (23 wt.%) and polysaccharides (41 wt.%).
Different additives were added to the eucalyptus extract for obtaining different adhesives.
Lactic acid (AcL). Ecological lactic acid Pharma grade with 90.8 wt.% purity and less than 95 % S-enantiomer was supplied by Panreac (Barcelona, Spain).
Dimethylsulfoxide (DMSO). DMSO with purity of 99.99 % - analytical grade - was supplied by Carlo Erba Reagents (Sabadell, Spain).
Clay-embedded *Glomus iranicum* var. *tenuihypharum* var. nov. (Resid HC) supplied by Symborg S.L., Murcia, Spain.

1. Used eucalyptus extract-based adhesives

- Adhesive made with eucalyptus extract - EE
- Adhesive made with eucalyptus extract and lactic acid - EE/AcL
- Adhesive made with eucalyptus extract, lactic acid and DMSO - EE/AcL/DMSO

The adhesives, i.e., the adhesive compositions can be produced as aqueous mixtures by admixing the different components in water.

Table 13 show the composition by weight and percentage of the eucalyptus extract-based adhesives.

**Table 13.** Nomenclature and composition in solid content percentage (EE) and percentage by weight (AcL, DMSO and $H_2O$) of the eucalyptus extract-based adhesives.

| Adhesive | EE (%) | AcL (%) | DMSO (%) | $H_2O$ (%) |
|---|---|---|---|---|
| EE | 20-80 | - | - | add to complete 100% |
| EE/AcL | 20-80 | 0.01-10 | - | add to complete 100% |
| EE/AcL/DMSO | 20-80 | 0.01-10 | 1-30 | add to complete 100% |

2. Experimental techniques

**Procedure of impregnation of the seeds with eucalyptus extract-based adhesives.**

The impregnation of corn seeds with clay-embedded *Glomus iranicum* var. *tenuihypharum* var. nov. by using the eucalyptus extract-based adhesives was carried out in a SATEC CONCEPT ML 2000 equipment (Satec Equipment GmBh, Elmshorn, Germany) with a capacity of 0.5-2.5 dm$^3$.

**Impregnation of the seeds with clay-embedded *Glomus iranicum* var. *tenuihypharum* var. nov. and eucalyptus extract-based adhesives.** 400 g seeds were placed into the laboratory coater, the equipment was turned on at maximum power and the adhesive and the clay-embedded *Glomus iranicum* var. *tenuihypharum* var. nov. were added alternately and continuously, little by little, in several cycles, the final addition was made with the remaining adhesive.

For the impregnation of the corn seeds, 2 g clay-embedded *Glomus iranicum* var. *tenuihypharum* var. nov. and 2 mL adhesive diluted with 2.8 mL water were used. ***In vitro* germination test.** The seeds treated with eucalyptus extract-based adhesives and clay-embedded *Glomus iranicum* var. *tenuihypharum* var. nov. biostimulant were placed in Petri dishes with double paper moistened with bidistilled water (6 mL/plate). 200 seeds (25 seeds/plate) were used for each treatment. The plates were placed in small containers sealed with plastic. The seeds were incubated at 25 °C and 65 % relative humidity for 48 hours in the dark and the number of germinated seeds in each treatment was evaluated periodically over time. Seeds treated with water were used as a control. The percentage of germinated seeds was obtained by using Equation (4) :

$$Germination\ (\%) = Number\ of\ germinated\ seeds/total\ number\ of\ seeds)\ x\ 100$$

Equation (4)

3. Results and discussion

The effect caused by eucalyptus extract-based adhesives on seed germination has been evaluated by quantifying the germination percentage (%) obtained in the *in vitro* germination test.

Figure 24 shows the germination values of the corn seeds impregnated with eucalyptus extract-based adhesives and with and without clay-embedded *Glomus iranicum* var. *tenuihypharum* var. nov. biostimulant. The use of the adhesive containing lactic acid and DMSO enhances the germination percentage of the corn seeds. Furthermore, the use of adhesives and clay-embedded *Glomus iranicum* var. *tenuihypharum* var. nov. biostimulant causes a more noticeable increase of the germination percentage, and the germination percentage is better when the adhesive contains DMSO.

4. Conclusions

- The addition of eucalyptus extract-based adhesives induces the germination of the corn seeds.

- The addition of eucalyptus extract-based adhesives containing DMSO enhances in greater extent the germination of the corn seeds.

- The addition of eucalyptus extract-based adhesives together with clay-embedded *Glomus iranicum* var. *tenuihypharum* var. nov. biostimulant enhances more the germination of the corn seeds than by using the eucalyptus extract-based adhesives only. The enhancement of the germination performance is more marked when the eucalyptus extract-based adhesive contains DMSO.

- The addition of DMSO in the eucalyptus extract-based adhesive has a positive effect in increasing the germination of the corn seeds.

**Claims**

1. Use of at least one plant extract as adhesive in seed coating or as a binder in the production of granules and microgranules.

2. The use according to claim 1, wherein said plant extract comprises lignin and/or pectin.

3. The use according to claim 1, wherein said plant extract is selected from eucalytpus extract, wheat straw extract, pine straw extract, alfalfa extract, kenaf extract, flax fiber extract, aspen extract, pau-brasil extract, bamboo extract, corn stover extract, sugar cane bagasse extract, Napier grass extract, ryegrass extract, tall fescue extract, bluestem extract, red clover extract, lespedeza extract, bromegrass extract, *Paulonia fortunei* wood extract, prairie cordgrass extract, switchgrass extract, Sweetgum extract, pruce and birch wood chips extract, almond shell extract, beech wood extract, spruce wood extract, dhaincha (*Sesbania bispinosa*) extract, kash phool *(Saccharum spontaneum)* extract, banana stem extract, chestnut wood extract, quebracho wood extract, rubberwood extract, lambu (*Khaya anthotheca*) extract, raj-koroi (*Albizia richardiana*) extract, jhau (*Casuarina equisetifolia*) extract, sil-koroi (*Albizia procera)* extract, katbadam (*Terminalia catappa*) extract, jolpai (*Elaeocarpus robustus*) extract, and arjun (*Terminalia arjuna*) extract, poplar extract, fescue extract and mixtures thereof.

4. The use according to claim 1, wherein said plant extract is eucalyptus extract.

5. The use according to claim 1 to 4, wherein said plant extract is used to coat a seed with a coating material selected from an inert carrier, a colorant, a fungicide, a bio-fungicide, an insecticide, a bio-insecticide, a nematicide, a bio-nematicide, a fertiliser and mixtures thereof.

6. The use according to claim 1 to 4, wherein said plant extract is used to coat an inert material with a coating material selected from a colorant, a fungicide, a bio-fungicide, an insecticide, a bio-insecticide, a nematicide, a bio-nematicide, a fertiliser and mixtures thereof.

7. An adhesive comprising at least a plant extract and a carboxylic acid and/or DMSO.

8. The adhesive according claim 7, wherein said carboxylic acid is selected from saturated aliphatic carboxylic acid, unsaturated aliphatic carboxylic acid, aromatic carboxylic acid, polycarboxylic acid, hydroxy and keto carboxylic acid, and mixtures thereof.

9. The adhesive according to claim 8, wherein said carboxylic acid is selected from lactic acid, citric acid, caffeic acid, gallic acid, glycolic acid, oxalic acid, malonic acid, ascorbic acid, acetic acid, formic acid, crotonic acid, butyric acid, palmitic acid, stearic acid, adipic acid, sorbic acid, oleic acid, linoleic acid, benzoic acid, salicylic acid, phthalic acid, cinnamic acid, tartaric acid, pyruvic acid and mixtures thereof.

10. The adhesive according to claim 9, wherein said carboxylic acid is lactic acid.

11. The adhesive according to claim 7, wherein said plant extract comprises lignin and/or pectin.

12. The adhesive according to claim 7, wherein said plant extract is selected from eucalyptus extract, wheat straw extract, pine straw extract, alfalfa extract, kenaf extract, flax fiber extract, aspen extract, pau-brasil extract, bamboo extract, corn stover extract, sugar cane bagasse extract, Napier grass extract, ryegrass extract, tall fescue extract, bluestem extract, red clover extract, lespedeza extract, bromegrass extract, *Paulonia fortunei* wood extract, prairie cordgrass extract, switchgrass extract, Sweetgum extract, pruce and birch wood chips extract, almond shell extract, beech wood extract, spruce wood extract, dhaincha n(*Sesbania bispinosa*) extract, kash phool (*Saccharum spontaneum*) extract, banana stem extract, chestnut wood extract, quebracho wood extract, rubberwood extract, lambu (*Khaya anthotheca*) extract, raj-koroi (*Albizia richardiana*) extract, jhau (*Casuarina equisetifolia*) extract, sil-koroi (*Albizia procera*) extract, katbadam (*Terminalia catappa*) extract, jolpai (*Elaeocarpus robustus*) extract, and arjun (*Terminalia arjuna*) extract, poplar extract, fescue extract and mixtures thereof.

**13.** The adhesive according to claim 7, wherein said plant extract is eucalyptus extract.

**14.** The adhesive according to any claim 7 to 13, wherein the amount of said plant extract, is in the range from 10% to 90% by weight of the adhesive.

**15.** The adhesive according to any claim 7 to 14, wherein the amount of said carboxylic acid is in the range from 0.005% by weight to 20% by weight of the adhesive.

**16.** The adhesive according to any claim 7 to 15, wherein the amount of said DMSO may be in the range from 0.05% by weight to 50% by weight of the adhesive.

**17.** The adhesive according to any claim 7 to 16, further comprising one or more plasticizers, wherein said plasticizer is selected from synthetic plasticizers, natural plasticizers and mixtures thereof.

**18.** The adhesive according to any claim 7 to 17, further comprising one or more surfactants, wherein said surfactant is selected from synthetic surfactants, natural surfactants and mixtures thereof.

**19.** Use of the adhesive according to any claim 7 to 18 in seed coating or in the production of granules or microgranules.

**20.** A seed or an inert core material provided with the adhesive according to any claim 7 to 18.

**21.** A coated seed or a granule or microgranule, wherein said coated seed or said granule or microgranule comprises said adhesive according to any claim 7 to 18 and at least one coating material.

**22.** The coated seed or the granule or microgranule according to claim 21, wherein said coating material is selected from an inert carrier, a colorant, a fungicide, a bio-fungicide, an insecticide, a bio-insecticide, a nematicide, a bio-nematicide, a fertiliser (such as a plant biostimulant), and mixtures thereof.

**23.** A seed according to claim 20 or a coated seed according to claim 21, wherein said seed is selected from extensive crop seeds and horticultural crops seeds.

**24.** Use of said adhesive according to claim 7 to induce germination of seeds, wherein said adhesive comprises DMSO.

**Figure 1**

15 cm

3 cm

Specimen

12 cm

Specimen + adhesive

Adhesive

Joint for T-peel
Test

**Figure 2**

Force (N)

Displacement (mm)

**Figure 3**

3 cm

Adhesive

3 cm

15 cm

Specimen

**Figure 4**

Adhesive

Joint

Adhesive

Specimen 1

Specimen 2

Adhesive

**Figure 5**

Specimen 1

Adhesive

Specimen 2

**Figure 6**

**Figure 7**

**Figure 8**

Drive & control unit     Rotating drum    Glass cylinder     Filter unit

**Figure 9**

**Figure 10**

Figure 11

Figure 12

**Figure 13**

**Figure 14**

**Figure 15**

**Figure 16**

**Figure 17**

**Figure 18**

**Figure 19**

**Figure 20**

EE     EE/AcL     EE/DMSO     EE/AcL/DMSO

## Figure 21

## Figure 22

EE          EE/AcL          EE/DMSO          EE/AcL/DMSO

**Figure 23**

**Figure 24**

Europäisches
Patentamt
European
Patent Office
Office européen
des brevets

# EUROPEAN SEARCH REPORT

**Application Number**

EP 23 38 2258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARDIN SYLVIE ET AL: "Efficacy of stickers for seed treatment with organic matter or microbial agents for the control of damping-off of sugar beet", PLANT PATHOLOGY BULLETIN, vol. 12, 1 January 2003 (2003-01-01), pages 19-26, XP093064620, | 1,5,7,8, 14,15, 17-23 | INV. A01N1/02 A01N25/10 A01N25/12 A01N25/24 A01N25/26 A01N25/30 A01N65/28 |
| Y | * the whole document * | 1-24 | |
| X | US 2012/220454 A1 (CHEN ZHIYUN [US] ET AL) 30 August 2012 (2012-08-30) | 1,2,5-8, 11,17-23 | |
| Y | * the whole document * | 1-24 | |
| X | CN 104 094 961 B (LIAONING DONGYA SEED CO LTD) 6 April 2016 (2016-04-06) * the whole document * | 1,5-8, 14-24 | |
| X | INÊS ROCHA ET AL: "Seed Coating: A Tool for Delivering Beneficial Microbes to Agricultural Crops", FRONTIERS IN PLANT SCIENCE, vol. 10, 1 November 2019 (2019-11-01), pages 1357-1, XP055691926, CH ISSN: 1664-462X, DOI: 10.3389/fpls.2019.01357 | 1,5-8, 17-23 | |
| Y | * page 5, left column, first paragraph * * the whole document * | 1-24 | TECHNICAL FIELDS SEARCHED (IPC) A01N |
| X | AMIRI MOHAMMAD SADEGH ET AL: "Plant-Based Gums and Mucilages Applications in Pharmacology and Nanomedicine: A Review", MOLECULES, vol. 26, no. 6, 22 March 2021 (2021-03-22) , page 1770, XP093064283, DOI: 10.3390/molecules26061770 | 1,7,8, 18-22 | |
| Y | * the whole document * | 1-24 | |

-/--

The present search report has been drawn up for all claims

| Place of search | Date of completion of the search | Examiner |
|---|---|---|
| Munich | 16 August 2023 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 434 343 A1**

Europäisches Patentamt
European Patent Office
Office européen des brevets

## EUROPEAN SEARCH REPORT

Application Number

EP 23 38 2258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAWHENA TATENDA GIFT ET AL: "Application of Gum Arabic and Methyl Cellulose Coatings Enriched with Thyme Oil to Maintain Quality and Extend Shelf Life of "Acco" Pomegranate Arils", PLANTS, vol. 9, no. 12, 1 December 2020 (2020-12-01), page 1690, XP093064284, DOI: 10.3390/plants9121690 | 1-9,14, 15,17-22 | |
| Y | * the whole document * | 1-24 | |
| X | ZHANG YAO ET AL: "Study on the Preparation and Effect of Tomato Seedling Disease Biocontrol Compound Seed-Coating Agent", LIFE, vol. 12, no. 6, 7 June 2022 (2022-06-07), page 849, XP093064302, DOI: 10.3390/life12060849 | 1,5,6, 14,15, 18-23 | |
| Y | * the whole document * | 1-24 | TECHNICAL FIELDS SEARCHED (IPC) |
| X | RIVA, S. C., OPARA, U. O., & FAWOLE, O. A: "Recent developments on postharvest application of edible coatings on stone fruit: A review", SCIENTIA HORTICULTURAE, vol. 262, 4 December 2019 (2019-12-04), page 110, XP009545399, | 7,8,17, 18,20 | |
| Y | * the whole document * | 1-24 | |

-/--

The present search report has been drawn up for all claims

| Place of search | Date of completion of the search | Examiner |
|---|---|---|
| Munich | 16 August 2023 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 4

33

Europäisches
Patentamt

European
Patent Office

Office européen
des brevets

**EUROPEAN SEARCH REPORT**

Application Number

EP 23 38 2258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SENER S ET AL: "The Effect of Eucalyptus (Eucalyptus camaldulensis Dehnh) Essential Oil on the Germination and Plantlet Growth Parameters of Some Solanaceae Species", JOURNAL OF AGRICULTURE AND VETERINARY SCIENCE, vol. 11, no. 12, 1 January 2018 (2018-01-01), pages 28-33, XP093064645, DOI: 10.9790/2380-1112022833 | 1,3,4 | |
| Y | * the whole document * | 1-24 | |
| X | BAIOTTO CRISTIANO S. ET AL: "Antifungal effect of essential oils on control of phytopathogens in stored soybean seeds", REVISTA BRASILEIRA DE ENGENHARIA AGRÍCOLA E AMBIENTAL, vol. 27, no. 4, 5 December 2022 (2022-12-05), pages 272-278, XP093064651, ISSN: 1415-4366, DOI: 10.1590/1807-1929/agriambi.v27n4p272-278 | 1,3,4,6 | |
| Y | * the whole document * | 1-24 | TECHNICAL FIELDS SEARCHED (IPC) |
| X | SOHAIL MARIAM ET AL: "Recent advances in seed coating technologies: transitioning toward sustainable agriculture", GREEN CHEMISTRY, vol. 24, no. 16, 1 January 2022 (2022-01-01), pages 6052-6085, XP093064666, GB ISSN: 1463-9262, DOI: 10.1039/D2GC02389J | 1,2,5-8, 11,17-23 | |
| Y | * the whole document * | 1-24 | |

-/--

The present search report has been drawn up for all claims

| Place of search | Date of completion of the search | Examiner |
|---|---|---|
| Munich | 16 August 2023 | Lorenzo Varela, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 23 38 2258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Tomkinson, J.: "Adhesives Based on Natural Resources", 2002, European Commission, Directorate General for Research, Brussels, XP009545410, ISBN: 92-894-4891-1 vol. 2, pages 46-65, * pages 46 and 47 * | 1-24 | |

TECHNICAL FIELDS
SEARCHED      (IPC)

The present search report has been drawn up for all claims

| Place of search | Date of completion of the search | Examiner |
|---|---|---|
| Munich | 16 August 2023 | Lorenzo Varela, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 4 of 4

## ANNEX TO THE EUROPEAN SEARCH REPORT
## ON EUROPEAN PATENT APPLICATION NO.

EP 23 38 2258

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2023

| Patent document cited in search report | | Publication date | Patent family member(s) | | Publication date |
|---|---|---|---|---|---|
| US 2012220454 | A1 | 30-08-2012 | AU | 2012223522 A1 | 12-09-2013 |
| | | | CN | 103391710 A | 13-11-2013 |
| | | | EA | 201391103 A1 | 28-02-2014 |
| | | | EP | 2680685 A2 | 08-01-2014 |
| | | | EP | 3414983 A1 | 19-12-2018 |
| | | | ES | 2898437 T3 | 07-03-2022 |
| | | | HU | E056081 T2 | 28-01-2022 |
| | | | MX | 364346 B | 23-04-2019 |
| | | | PL | 3414983 T3 | 27-12-2021 |
| | | | US | 2012220454 A1 | 30-08-2012 |
| | | | WO | 2012118795 A2 | 07-09-2012 |
| CN 104094961 | B | 06-04-2016 | NONE | | |

For more details about this annex : see Official Journal of the European Patent Office, No. 12/82